# EUROPÄISCHE PATENTSCHRIFT

(11) **EP 3 394 504 B1**
(45) Veröffentlichungstag und Bekanntmachung des Hinweises auf die Patenterteilung: **30.10.2019**
(21) Anmeldenummer: 16822368.3
(22) Anmeldetag: 07.12.2016
(51) Int. Cl.: F21S 41/24, F21S 41/25, F21S 41/663, F21S 41/143

(54) **SCHEINWERFER FÜR EIN FAHRZEUG**
HEADLAMP FOR A VEHICLE
PHARE POUR UN VÉHICULE

(30) Priorität: 21.12.2015 AT 510882015
(43) Veröffentlichungstag der Anmeldung: 31.10.2018
(73) Patentinhaber: ZKW Group GmbH, 3250 Wieselburg (AT)
(72) Erfinder: TAUDT, Lukas, 3250 Wieselburg (AT); KRENN, Irmgard, 3251 Purgstall/Erlauf (AT); PLANK, Josef, 3251 Purgstall/Erlauf (AT)
(74) Vertreter: Patentanwaltskanzlei Matschnig & Forsthuber OG
(86) Internationale Anmeldenummer: PCT/AT2016/060118
(87) Internationale Veröffentlichungsnummer: WO 2017/106891

(56) Entgegenhaltungen:
- WO-A1-2017/015684
- AT-B1- 513 341
- AT-B1- 513 738
- JP-A- 2012 256 491

## Beschreibung

Die Erfindung betrifft einen Scheinwerfer für ein Fahrzeug, mit zumindest einer Lichtquelle, einer Primäroptik zum Erzeugen eines Leuchtbildes und einer Abbildungsoptik,
wobei mittels der Abbildungsoptik das Leuchtbild als Lichtbild auf die Straße projizierbar ist, die Primäroptik eine Vielzahl von Lichtführungselementen sowie eine Trägerschicht aufweist, wobei auf einer Rückseite der Trägerschicht die Lichtführungselemente angeordnet sind, und auf einer Vorderseite der Trägerschicht das Leuchtbild erzeugbar ist,
die Lichtführungselemente nebeneinander angrenzend oder überlappend in einer Reihe in einer Achsrichtung angeordnet sind und zumindest eine Zeile ausbilden, wobei jedes Lichtführungselement eine Lichteintrittsfläche zum Einkoppeln von Licht aus zumindest einer Lichtquelle, sowie eine Lichtaustrittsfläche zum Auskoppeln von Licht aufweist.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im verwendeten Sinn einer Projektion auf eine vertikale Fläche entsprechend der einschlägigen Normen, die sich auf die KFZ-Beleuchtungstechnik beziehen.

Um diesem genannten Bedürfnis zu entsprechen, wurden unter anderem Scheinwerfer entwickelt, die aus einer Mehrzahl von Einzelstrahlern eine Leuchtmatrix bilden. Derartige Leuchteinrichtungen, die auch als "Pixellicht" bezeichnet werden, sind im Fahrzeugbau gebräuchlich und dienen beispielsweise der Abbildung von blendfreiem Fernlicht, indem das Licht in der Regel von einer Mehrzahl von Lichtquellen ausgestrahlt wird und von einer entsprechenden Mehrzahl von nebeneinander angeordneten Lichtführungen (Vorsatzoptik/ Primäroptik) in Abstrahlrichtung gebündelt wird. Die Lichtführungen weisen einen relativ geringen, trichterförmigen Querschnitt auf und senden das Licht der ihnen zugeordneten einzelnen Lichtquellen daher sehr konzentriert in die Abstrahlrichtung aus. Die Lichtführungen leiten das Licht von den Lichtquellen zu einer möglichst gut angenäherten Position auf einer räumlich gekrümmten Ebene, der Petzval-Ebene der vorgelagerten Abbildungsoptik, weiter.

Pixelscheinwerfer sind hinsichtlich der Lichtverteilung sehr flexibel, da für jedes Pixel, d.h. für jede Lichtführung die Beleuchtungsstärke individuell geregelt werden kann und beliebige Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung oder eine Fernlicht-Lichtverteilung.

Die AT 513 738 B1 beschreibt Scheinwerfersysteme der Anmelderin, welche das Licht einer großen Anzahl von Leuchtdioden (LEDs) über Projektionssysteme mit Einzellinsen als Lichtbild auf die Fahrbahn projizieren, wobei die Helligkeit der einzelnen LEDs, die von einer zentralen Recheneinheit ausgehend gesteuert werden, individuell eingestellt bzw. geändert werden kann.

Zusätzlich zur variablen Beleuchtungsstärke kann die Geometrie der Lichtführungselemente genutzt werden, um Lichtbilder zu beeinflussen.

Die DE 10 2012 213 845 A1 offenbart eine Beleuchtungsvorrichtung, die bei Fahrzeugscheinwerfern mit einer Primäroptik deren Lichtführungselemente derart gestaltet, dass die Intensität in Längsrichtung der Austrittsfläche variiert wird. Dabei wird von jeweils gleichartigen Lichtführungselementen innerhalb einer Primäroptik ausgegangen.

Die Anzahl von Lichtquellen innerhalb der Leuchtmatrix eines Scheinwerfers bestimmt die Auflösung des Lichtbildes und den Detaillierungsgrad, mit welchem innerhalb einer Lichtverteilung Bereiche entweder gezielt ausgeblendet bzw. stärker oder schwächer angestrahlt werden können. Es können beispielsweise auf einer Straße entgegenkommende Fahrzeuge gezielt ausgeblendet werden, um diese nicht zu blenden, oder selektiv Verkehrszeichen stärker angeleuchtet werden, um deren Lesbarkeit zu erhöhen. Grundsätzlich wird innerhalb einer Lichtverteilung meist eine höhere Auflösung im Bereich der Mitte der Lichtverteilung, also vor dem Fahrzeug benötigt, als am Rand der Lichtverteilung, d.h. am Straßenrand. Somit nimmt die Anzahl der Lichtquellen oft von der Mitte ausgehend zu Rand hin, ab. Gleichzeitig ist das Intensitätsmaximum der Lichtverteilung meist in der Mitte der Lichtverteilung ausgeprägt, und nimmt zum Rand hin ab. Daraus ergibt sich beispielsweise eine Vergrößerung der Lichtaustrittsflächen, ausgehend von der Mitte einer Beleuchtungsreihe bis hin zum Rand, um dieser gewünschten Helligkeits-Verringerung Rechnung zu tragen.

Die gesamte Projektionsanordnung besteht aus Lichtquelle, der Primäroptik und einer Abbildungsoptik (Projektionslinse). Die Abbildungsoptik kann je nach Ausführung zu Verzeichnungen führen. Die Verzeichnung ist ein geometrischer Abbildungsfehler optischer Systeme, der zu einer lokalen Veränderung des Abbildungsmaßstabes führt. Die Maßstabsänderung beruht auf einer Änderung der Vergrößerung mit zunehmendem Abstand des Bildpunktes von der optischen Achse. Die Verzeichnung ist daher rotationssymmetrisch um einen Punkt, der auch Verzeichnungszentrum genannt wird. Die Ursache der Verzeichnung liegt an Blenden, die das Strahlenbündel der Abbildung vor oder hinter der Hauptebene eines optischen Systems mit Öffnungsfehler einengen. Nimmt die Vergrößerung zu den Rändern des Bildfelds zu, dann wird ein Quadrat kissenförmig verzeichnet. Im umgekehrten Fall spricht man von tonnenförmiger Verzeichnung. Es können auch Verzeichnungen höherer Ordnung auftreten, und die Überlagerung verschiedener Ordnungen kann zu einer wellenförmigen Abbildung gerader Linien führen ("wellenförmige Verzeichnung").

Verzeichnungen äußern sich im Lichtbild eines Scheinwerfers durch unerwünschte Krümmungen oder Ausleuchtung von Bereichen, die außerhalb der im Straßenverkehr zulässigen Leuchtbereiche fällt, z.B. über der Hell-Dunkel-Grenze.

Das Maß der Verzeichnung ist bekannt nach DIN ISO 9039: Optik und Photonik - Qualitätsbewertung optischer Systeme - Bestimmung der Verzeichnung (ISO 9039:2008).

Die AT 511 760 A1 offenbart den gezielten Beschnitt des Lichtbilds mittels einer zusätzlichen Blende, um die durch die Abbildungsoptik auftretende kissenförmige Verzeichnung abzuschneiden. Blenden vernichten dabei jedoch aufwändig erzeugtes Licht, verringern somit die Effizienz des Scheinwerfers und bilden ein weiteres Bauteil im Scheinwerfer, das zusätzlich Kosten in Herstellung verursacht und zusätzlich Bauraum im Scheinwerfer benötigt. Ein weiterer Nachteil beim Einsatz von Blenden ist die hervorgerufene Beugung und deren Abhängigkeit von der Wellenlänge.

In den derzeit bekannten, oben erwähnten Leuchteinrichtungen der Anmelderin kommt eine zweidimensionale reihenförmige Anordnung der Lichtquellen, typischerweise LEDs, zur Anwendung, um eine segmentierte Abblend- und Fernlichtverteilung zu erzeugen. Oft werden dazu im zentralen Bereich die Lichtaustrittsflächen der Lichtführungselemente kleiner gehalten werden als am Rand.

Eine Aufgabe der vorliegenden Erfindung liegt darin, das Auftreten der zuvor beschriebenen störenden Verzeichnung kostengünstig zu minimieren, ohne dabei die Effizienz des optischen Systems zu beeinträchtigen.

Diese Aufgabe wird mit einer Leuchteinrichtung der eingangs genannten Art dadurch gelöst, dass die Gesamtheit der Lichtführungselemente der zumindest einen Zeile eine gemeinsame Umrandung aufweist, die auf zumindest einer im Wesentlichen entlang der Achsrichtung orientierten Seite stetig gekrümmt ist und mit der Trägerschicht eine Schnittkurve mit einen gekrümmten Kurvenverlauf ausbildet, wobei der Kurvenverlauf derart gekrümmt ist, um eine Verzeichnung zu reduzieren.

Dank der Erfindung kann durch eine technisch einfache und kostensparende Maßnahme beispielsweise auf den Einsatz von vorgelagerten Blenden verzichtet werden, da sowohl die Lichtführung von der Lichtquelle zur Petzval-Ebene der Abbildungsoptik, als auch die angestrebte Kompensation der Verzeichnung, die durch die Abbildungsoptik hervorgerufen wird, im gleichen Bauteil - nämlich der Primäroptik - durchgeführt wird. Die Effizienz des Scheinwerfers wird zudem nicht beeinträchtigt.

Die Primäroptik umfasst somit sowohl die Funktion einer Lichtführung und als auch die einer Verzeichnungsreduktion und wird in der Konstruktionsphase innerhalb desselben Bauteils umgesetzt. Die Primäroptik wird vorzugsweise als Silikon-Spritzguss-Teil gefertigt. Dieses Bauteil ist vorzugsweise mechanisch weich und wird durch eine weitere Stützstruktur in Form und Position gehalten, die meist einem Negativ des Lichtelements aus einem harten Material entspricht. Sowohl Leuchtelement als auch Stützstruktur sind durch Spritzguss-Verfahren einfach und kostengünstig herstellbar.

Ein weiterer Vorteil der Erfindung liegt darin, dass die gewünschte Minimierung der Verzeichnung durch Verwendung einer Vorverzerrung breitbandig erfolgt, d.h. für alle Spektralanteile des verwendeten Lichts gleichermaßen und keine störenden Beugungseffekte erzeugt werden.

Besonders vorteilhaft ist es, wenn die Zeilen in der Einbaulage im Fahrzeug horizontal oder vertikal orientiert angeordnet sind, um die Ausbildung von geeigneten Lichtverteilungen zu unterstützen.

Die Gesamtheit der Lichtführungselemente weist zumindest für eine Zeile eine gemeinsame Umrandung auf, die auf zumindest einer im Wesentlichen entlang der Achsrichtung orientierten Seite stetig gekrümmt ist und mit der Trägerschicht eine Schnittkurve mit einen gekrümmten Kurvenverlauf ausbildet, wobei die Achsrichtung sowohl in horizontaler als auch in vertikaler Richtung orientiert sein kann, je nach Einbaulage im Fahrzeug.

In einer Ausführungsform kann folglich sowohl in Achsrichtung, meist horizontal, als auch in der dazu orthogonalen Richtung, meist vertikal, der genannte Kurvenverlauf ausgebildet sein, d.h. bei einer rechteckförmigen Anordnung mehrerer Zeilen mit jeweils mehreren Reihen kann auf vier Seiten der Gesamtheit der Lichtführungselemente eine entsprechende Umrandung ausgeführt sein.

In einer vorteilhaften Ausführungsform umfasst der Scheinwerfer mehrere parallele Zeilen, die gemeinsame oder auch eigenständige Lichtbilder erzeugen. Dabei werden beispielsweise in horizontaler Einbaulage im Fahrzeug mehrere horizontale Reihen von vertikal übereinander angeordneter Beleuchtungsreihen, die unterschiedliche Lichtbilder des Scheinwerfers durch selektives Schalten der einzelnen Reihen ermöglichen. Die einzelnen Reihen weisen beispielsweise verschiedene Lichtführungselemente in unterschiedlichen Abständen auf, um das gewünschte Lichtbild zu erzielen. Oft werden genau drei übereinander liegende Reihen angeordnet. Bei einer solchen Anordnung kann die obere Reihe als Vorfeldreihe, die mittlere Reihe als Asymmetrie-Reihe und die unterste Reihe als Fernlichtreihe ausgebildet sein.

Da besonders die Außenkontur der Primäroptik des Scheinwerfers einen ungünstigen Einfluss auf das Lichtbild hat, reicht es oft aus, wenn alle Zeilen der Primäroptik eine gemeinsame Umrandung formen, die auf zumindest einer in Achsrichtung orientierten Seite stetig gekrümmt ist und mit der Trägerschicht eine Schnittkurve mit einen gekrümmten Kurvenverlauf ausbildet. Durch diesen Schritt wird die Konstruktion vereinfacht.

Der Kurvenverlauf der Umrandung hängt von Lage und Abmessungen der Beleuchtungsreihe über der Projektionsachse der Abbildungsoptik ab. Die oberste Beleuchtungsreihe erfährt die stärkste Verzeichnung und muss daher am stärksten durch eine geeignete Umrandung korrigiert werden. Die Reihe, die am nächsten an der Projektionsachse der Abbildungsoptik liegt, erfährt die geringste Verzeichnung und ist oft derart minimal, dass auf eine Kompensation verzichtet werden kann.

Grundsätzlich ist ein gekrümmter Kurvenverlauf jeder einzelnen Beleuchtungsreihe sinnvoll, um die Verzeichnung durch die Abbildungsoptik zu minimieren. Falls mehrere Reihen simultan aktiv sind, wie das bei Matrix-Scheinwerfern meist üblich ist, ist folglich eine jeweilige Verzeichnungsreduktion ein probates Mittel. Da die Verzeichnung der mittig befindlichen Beleuchtungsreihen jedoch nicht in den Rändern des gesamten Lichtbilds in Erscheinung tritt, wird trotzdem oft auf einen gekrümmten Kurvenverlauf in der Umrandung verzichtet, um die Konstruktion zu vereinfachen. Zusätzlich ist die Größe der unerwünschten Verzeichnung nahe zur Projektionsachse, also bei den mittig liegenden Reihen, geringer. Ist eine besondere Homogenität des Lichtbilds gewünscht, ist auch ein erfindungsgemäßer Kurvenverlauf bei mittig liegenden Beleuchtungsreihen sinnvoll.

Günstig ist es, wenn der Kurvenverlauf zur Reduktion der Verzeichnung einer Cosinus-Funktion folgt. In der Konstruktion der Primäroptik kann zum diesem Zweck auch die Form eines Kreissegments oder Ellipsensegments als Kurvenverlauf angewandt werden, um einen ähnlichen Effekt zu erzielen. Eine besonders einfache Realisierung des Kurvenverlaufs in der Konstruktionsphase, d.h. im Design der Lichtführungselemente, wird dadurch ermöglicht, da die Cosinus-Funktion im kleinen Winkelbereich dem Kreissegment im Wesentlichen entspricht und konstruktiv besonders einfach realisierbar ist.

Grundsätzlich ist ein freigeformter Kurvenverlauf der Umrandung sinnvoll, um spezielle Lichtverteilungen gemeinsam mit Abbildungsoptiken zu erzielen, insbesondere, wenn die Abbildungsoptiken Verzeichnungen höherer Ordnung aufweisen. Ein freigeformter Kurvenverlauf kann beispielsweise eine freigeformte Linie, wie ein Kreisbogen mit von der Mitte einer Zeile jeweils nach außen hin zunehmender Krümmung sein.

Besonders effizient ist die Reduktion der Verzeichnung, wenn der Kurvenverlauf gemäß einer vordefinierten Vorschrift für das Maß der Verzeichnung einer Abbildungsoptik, wie beispielsweise DIN ISO 9039, gestaltet ist.

In eine vorteilhafte Ausführung des Scheinwerfers bildet die Umrandung beiderseits je einen Kurvenverlauf aus und beide gekrümmten Kurvenverläufe bilden gemeinsam eine konvexe Form.

Günstig ist es, wenn jedem Lichtführungselement bzw. der zugehörigen Lichteintrittsfläche jeweils mindestens eine Lichtquelle zugeordnet ist.

Grundsätzlich kann jede Reihe eine unterschiedliche Anzahl von Leuchtelementen aufweisen, auch die horizontalen Abstände zwischen den einzelnen Leuchtelementen sowie die Geometrien der Lichtführungselemente können unterschiedlich sein.

Die größtmögliche Flexibilität in der Gestaltung des Scheinwerfers wird erreicht, wenn jedem Lichtführungselement ein Beleuchtungselement zugeordnet wird. Diese Flexibilität bringt aber entsprechend höhere Kosten mit sich, die jedoch nicht immer benötigt wird.

Die Erfindung und deren Vorteile werden in Folgenden anhand von nicht einschränkenden Beispielen näher beschrieben, die in den beiliegenden Zeichnungen veranschaulicht sind. Die Zeichnungen zeigen in:
Fig. 1: die perspektivische Explosionsdarstellung eines Fahrzeugscheinwerfers nach dem Stand der Technik,
Fig. 2: eine Ansicht einer Primäroptik von unten nach dem Stand der Technik,
Fig. 3: eine Ansicht einer Primäroptik von hinten nach dem Stand der Technik,
Fig. 4: eine Ansicht der Primäroptik der Fig. 3 von oben,
Fig. 5: eine perspektivische Ansicht der Primäroptik der Fig. 3 und 4,
Fig. 6: eine Darstellung des Lichtbildes eines Scheinwerfers nach dem Stand der Technik,
Fig. 7: die perspektivische Explosionsdarstellung des erfindungsgemäßen Fahrzeugscheinwerfers
Fig. 8: eine Ansicht der Primäroptik nach der Erfindung von hinten;
Fig. 9: eine Ansicht der Primäroptik der Fig. 8 von oben und
Fig. 10: eine Darstellung eines mit einem Scheinwerfer nach der Erfindung erzielbaren Lichtbildes.

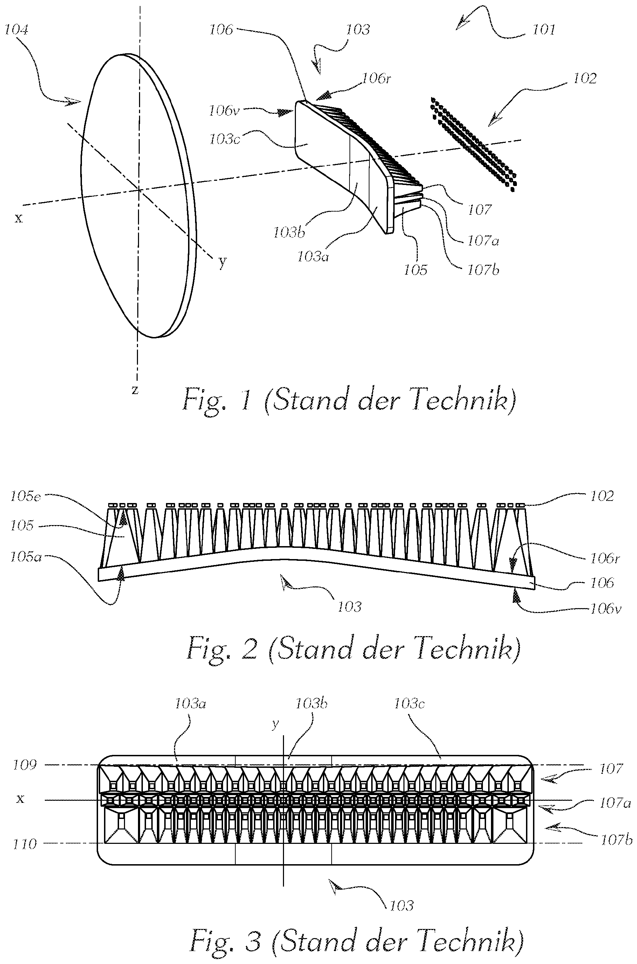

Unter Bezugnahme auf **Fig. 1** wird nun ein Ausführungsbeispiel der Erfindung näher erläutert. Insbesondere sind die für einen erfindungsgemäßen Scheinwerfer wichtigen Teile dargestellt, wobei klar ist, dass ein Scheinwerfer noch viele andere Teile enthält, die einen sinnvollen Einsatz in einem Kraftfahrzeug, wie insbesondere einem PKW oder Motorrad, ermöglichen.

In Fig. 1 ist beispielhaft ein Scheinwerfer 101 nach dem Stand der Technik für ein Fahrzeug mit zumindest einer Lichtquelle 102, einer Primäroptik 103 zum Erzeugen eines Leuchtbildes und einer Abbildungsoptik 104, wobei mittels der Abbildungsoptik 104 das Leuchtbild als Lichtbild auf die Straße projizierbar ist, dargestellt, wobei die Projektion in Richtung der optischen Achse z auf die Straße erfolgt und die Zeilen in der Einbaulage im Fahrzeug horizontal oder vertikal orientiert angeordnet sind.

Die Primäroptik 102 nach dem Stand der Technik in **Fig. 2** bis **Fig. 5** weist eine Vielzahl von Lichtführungselementen 105 auf, wobei jedes Lichtführungselement 105 eine Lichteintrittsfläche 105e zum Einkoppeln von Licht aus zumindest einer Lichtquelle 102, das beispielsweise von einer LED abgestrahlt wird, sowie jedes Lichtführungselement 105 eine Lichtaustrittsfläche 105a zum Auskoppeln von Licht aufweist.

Die Primäroptik 102 umfasst mehrere Lichtführungselemente 105, die nebeneinander angrenzend oder überlappend in einer Reihe in einer Achsrichtung y angeordnet sind und eine Zeile 107 ausbilden, wobei die Primäroptik 103 eine Vielzahl von Lichtführungselementen 105 sowie eine Trägerschicht 106 aufweist, wobei auf einer Rückseite 106r der Trägerschicht 106 die Lichtführungselemente 105 angeordnet sind und die Primäroptik 103 drei parallele, vertikal übereinander angeordnete Zeilen 107, 107a und 107b umfasst, und diese Anordnung drei horizontal angrenzende Bereiche 103a, 103b und 103c bildet.

Die Lichtaustrittsflächen 105a jeweils horizontal benachbarter Lichtführungselemente 105, ausgehend vom mittig liegenden Bereich 103b weisen zu beiden Enden 103a und 103c hin eine zunehmende Größe der Austrittsflächen 104a auf.

Die Lichtaustrittsflächen 105a sind üblicherweise größer als die korrespondierenden Lichteintrittsflächen 105e des jeweiligen Lichtführungselements 105.

Auf der Vorderseite 106v der Trägerschicht 106 ist das Leuchtbild erzeugbar, in der die Petzval-Ebene der Abbildungsoptik 103 liegt und das erzeugte Gesamtleuchtbild als Lichtbild vor das Fahrzeug projiziert.

Grundsätzlich sind die Formen der Lichteintrittsflächen 105e und Lichtaustrittsflächen 105a der Lichtführungselemente 105 frei wählbar, meist sind sie aber rund oder rechteckig oder quadratisch. Die jeweilige Form hängt von der gewünschten Anwendung - beispielsweise als Fernlicht - d.h. der Abstrahlungscharakteristik des Lichts aus dem einzelnen Lichtführungselement ab. Auch die longitudinale Form des Lichtführungselements 105 weist mehrere Freiheitsgrade bei deren Formgestaltung auf, wobei oft ein gerader - trichterförmiger - oder auch ein gekrümmter Verlauf häufig verwendet wird.

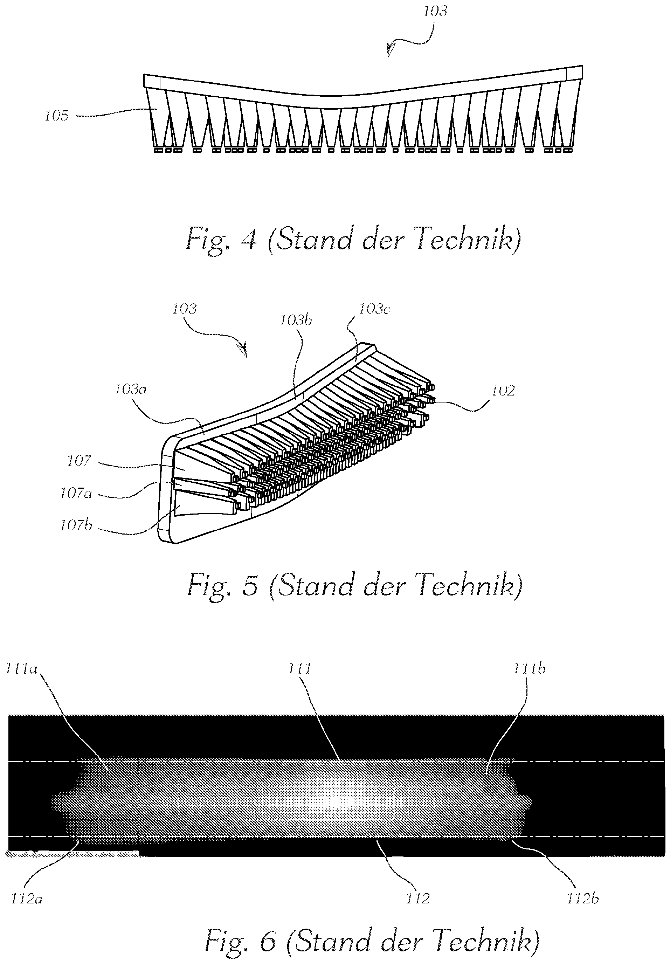

**Fig. 6** stellt das vom Scheinwerfer erzeugte Lichtbild nach dem Stand der Technik dar, in dem in den Ecken oben links und oben rechts jeweils eine Verzeichnung 111a bzw. 111b - eine kissenförmige Verzeichnung, sogenannte "Flügel" - zu erkennen ist. Auch die untere Kante 112 des Lichtbildes weist eine vertikale Krümmung 112a bzw. 112b (ebenfalls eine kissenförmige Verzeichnung) vom zentralen Bereich 103b zum Rand 103a bzw. 103c hin verlaufend auf, welche vor dem Fahrzeug im projizierten Lichtbild zu erkennen ist und einen störenden Effekt bildet.

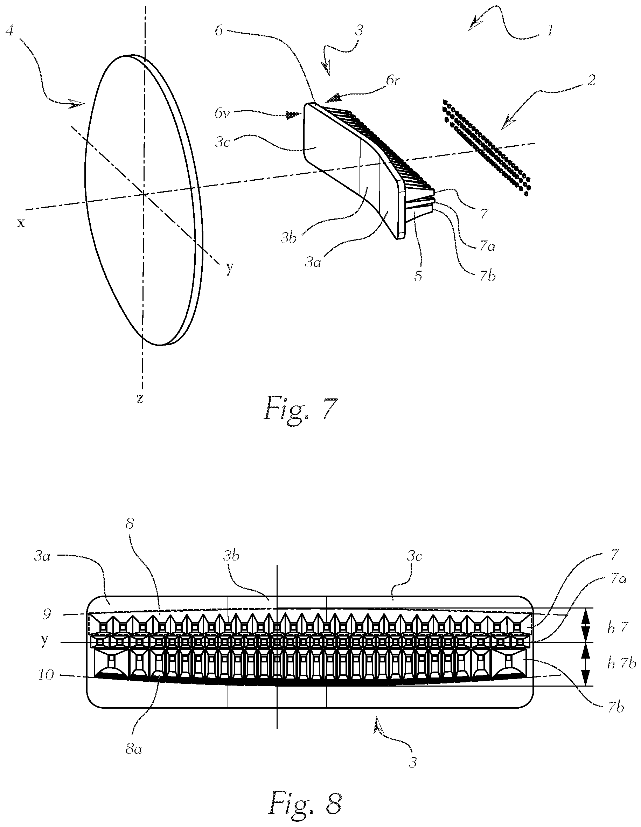

In **Fig. 7** ist beispielhaft ein erfindungsgemäßer Scheinwerfer 1 für ein Fahrzeug mit zumindest einer Lichtquelle 2, einer Primäroptik 3 zum Erzeugen eines Leuchtbildes und einer Abbildungsoptik 4, wobei mittels der Abbildungsoptik 4 das Leuchtbild als Lichtbild auf die Straße projizierbar ist, dargestellt und die Zeilen in der Einbaulage im Fahrzeug horizontal oder vertikal orientiert angeordnet sind.

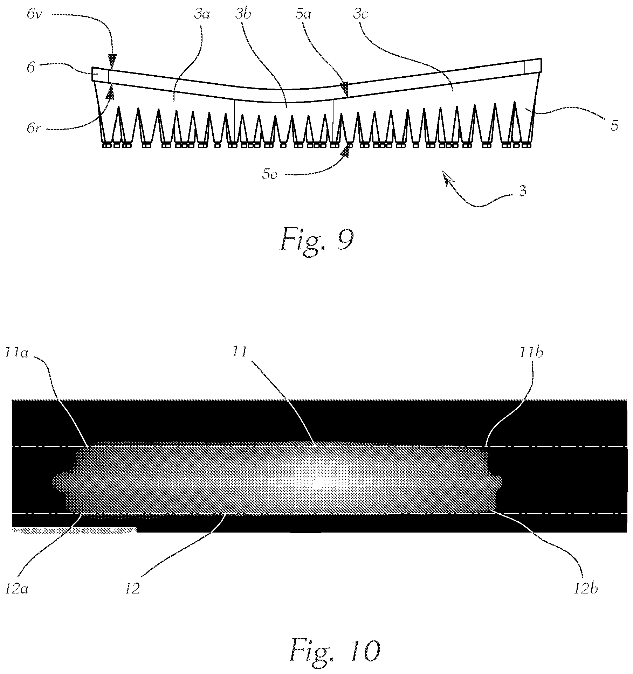

Die erfindungsgemäße Primäroptik 2 in **Fig. 8** und **Fig. 9** weist eine Vielzahl von Lichtführungselementen 5 auf, wobei jedes Lichtführungselement 5 eine Lichteintrittsfläche 5e zum Einkoppeln von Licht aus zumindest einer Lichtquelle 2, das beispielsweise von einer LED abgestrahlt wird, sowie jedes Lichtführungselement 5 eine Lichtaustrittsfläche 5a zum Auskoppeln von Licht aufweist.

Die Primäroptik 2 umfasst mehrere Lichtführungselemente 5, die nebeneinander angrenzend oder überlappend in einer Reihe in einer Achsrichtung y angeordnet sind und eine Zeile 7 ausbilden, wobei die Primäroptik 3 eine Vielzahl von Lichtführungselementen 5 sowie eine Trägerschicht 6 aufweist, wobei auf einer Rückseite 6r der Trägerschicht 6 die Lichtführungselemente 5 angeordnet sind und die Primäroptik 3 drei parallele, vertikal übereinander angeordnete Zeilen 7, 7a und 7b umfasst, und diese Anordnung drei horizontal angrenzende Bereiche 3a, 3b und 3c bildet.

Auf der Vorderseite 6v der Trägerschicht 6 ist das Leuchtbild erzeugbar, in der die Petzval-Ebene der Abbildungsoptik 3 liegt und das erzeugte Gesamtleuchtbild als Lichtbild vor das Fahrzeug projiziert.

Zusätzlich weist die Gesamtheit der Lichtführungselemente 5 der Zeilen 7, 7a und 7b eine gemeinsame Umrandung 8a auf, die auf zumindest einer im Wesentlichen entlang der Achsrichtung y orientierten Seite stetig gekrümmt ist und mit der Trägerschicht 6 eine Schnittkurve mit einen gekrümmten Kurvenverlauf 9 bzw. 10 ausbildet.

Die Krümmung der Kurven 9 und 10 folgt je nach verwendeter Abbildungsoptik vorzugsweise einem Cosinus, kann aber auch als Kreis- oder Ellipsensegment ausgeführt werden, um die Konstruktion zu vereinfachen. Hier nicht dargestellt sind komplexere Kurvenverläufe zur Reduktion der Verzeichnung, die auch denkbar sind, wenn die Abbildungsoptik Verzeichnungen höherer Ordnung erzeugt. Die Ausprägung der Krümmung kann vom vertikalen Abstand h₇ oder h_{7b} der horizontalen Reihe zur horizontalen Achse abhängen.

Das verbesserte Lichtbild mit den nahezu geraden Linien 11 und 12 ist in Fig. **10** gezeigt. Die Ecken 11a, 12a, 11b und 12b liegen im Vergleich zum Lichtbild nach dem Stand der Technik in Fig. 6 deutlich innerhalb der gewünschten Grenzen und keiner Ausprägung der "Flügel".

### Bezugszeichenliste:

- 1, 101: Scheinwerfer
- 2, 102: Lichtquelle
- 3, 103: Primäroptik
- 3a, 103a: Endbereich der Primäroptik, von vorne rechts
- 3b, 103b: Mittlerer Bereich der Primäroptik
- 3c, 103c: Endbereich der Primäroptik, von vorne links
- 4, 104: Abbildungsoptik
- 5, 105: Lichtführungselement
- 5a, 105a: Lichtaustrittsfläche eines Lichtführungselements
- 5e, 105e: Lichteintrittsfläche eines Lichtführungselements
- 6, 106: Trägerschicht
- 6r, 106r: Rückseite der Trägerschicht
- 6v, 106v: Vorderseite der Trägerschicht
- 7, 107: Obere Reihe der Lichtführungselemente
- 7a, 107a: Mittlere Reihe der Lichtführungselemente
- 7b, 107b: Untere Reihe der Lichtführungselemente
- 8: Gemeinsame Umrandung einer Zeile
- 8a: Gemeinsame Umrandung aller Zeilen
- 9, 109: Linie durch Kontur der oberen Begrenzung
- 10, 110: Linie durch Kontur der unteren Begrenzung
- 11, 111: Linie durch Verzeichnung der oberen Begrenzung des Lichtbildes
- 11a, 11b, 111a, 111b: Eckbereich der oberen Verzeichnung des Lichtbildes
- 12, 112: Linie durch Verzeichnung der unteren Begrenzung des Lichtbildes
- 12a, 12b, 112a, 112b: Eckbereich der unteren Verzeichnung des Lichtbildes
- h₇, h_{7b}: Vertikaler Abstand der horizontalen Reihe zur horizontalen Achse x

## Patentansprüche

1. Scheinwerfer (1) für ein Fahrzeug, mit zumindest einer Lichtquelle (2), einer Primäroptik (3) zum Erzeugen eines Leuchtbildes und einer Abbildungsoptik (4),
wobei mittels der Abbildungsoptik (4) das Leuchtbild als Lichtbild auf die Straße projizierbar ist,
die Primäroptik (3) eine Vielzahl von Lichtführungselementen (5) sowie eine Trägerschicht (6) aufweist, wobei auf einer Rückseite (6r) der Trägerschicht (6) die Lichtführungselemente (5) angeordnet sind, und auf einer Vorderseite (6v) der Trägerschicht (6) das Leuchtbild erzeugbar ist,
die Lichtführungselemente (5) nebeneinander angrenzend oder überlappend in einer Reihe in einer Achsrichtung (y) angeordnet sind und zumindest eine Zeile (7) ausbilden, wobei jedes Lichtführungselement (5) eine Lichteintrittsfläche (5e) zum Einkoppeln von Licht aus zumindest einer Lichtquelle (2), sowie eine Lichtaustrittsfläche (5a) zum Auskoppeln von Licht aufweist,
**dadurch gekennzeichnet, dass**
die Gesamtheit der Lichtführungselemente (5) der zumindest einen Zeile (7) eine gemeinsame Umrandung (8) aufweist, die auf zumindest einer im Wesentlichen entlang der Achsrichtung (y) orientierten Seite stetig gekrümmt ist und mit der Trägerschicht (6) eine Schnittkurve mit einem gekrümmten Kurvenverlauf (9, 10) ausbildet, wobei der Kurvenverlauf (9,10) derart gekrümmt ist, um eine Verzeichnung zu reduzieren.

2. Scheinwerfer (1) nach Anspruch 1, **dadurch gekennzeichnet, dass** der Scheinwerfer (1) mehrere parallele Zeilen (7, 7a, 7b) umfasst.

3. Scheinwerfer (1) nach Anspruch 1 oder 2, **dadurch gekennzeichnet, dass** die Zeilen (7, 7a, 7b) in der Einbaulage im Fahrzeug horizontal oder vertikal orientiert angeordnet sind.

4. Scheinwerfer (1) nach einem der Ansprüche 1 bis 3, **dadurch gekennzeichnet, dass** alle Zeilen (7, 7a, 7b) eine gemeinsame Umrandung (8a) formen, die auf zumindest einer in Achsrichtung (y) orientierten Seite stetig gekrümmt ist und mit der Trägerschicht (6) eine Schnittkurve mit einen gekrümmten Kurvenverlauf (9, 10) ausbildet.

5. Scheinwerfer (1) nach einem der Ansprüche 1 bis 4, **dadurch gekennzeichnet, dass** der Kurvenverlauf (9, 10) einer Cosinus-Funktion folgt.

6. Scheinwerfer (1) nach einem der Ansprüche 1 bis 4, **dadurch gekennzeichnet, dass** der Kurvenverlauf (9, 10) ein Kreissegment ist.

7. Scheinwerfer (1) nach einem der Ansprüche 1 bis 4, **dadurch gekennzeichnet, dass** der Kurvenverlauf (9, 10) ein Ellipsensegment ist.

8. Scheinwerfer (1) nach einem der Ansprüche 1 bis 4, **dadurch gekennzeichnet, dass** der Kurvenverlauf (9, 10) eine freigeformte Linie ist.

9. Scheinwerfer (1) nach einem der Ansprüche 1 bis 4, **dadurch gekennzeichnet, dass** der Kurvenverlauf (9, 10) eine freigeformte Linie ist, die einem Kreissegment mit zunehmender Krümmung entspricht.

10. Scheinwerfer (1) nach einem der Ansprüche 1 bis 9, **dadurch gekennzeichnet, dass** die Umrandung (8, 8a) auf zwei Seiten je einen Kurvenverlauf (9, 10) ausbildet und beide gekrümmten Kurvenverläufe (9, 10) gemeinsam betrachtet eine konvexe Form bilden.

11. Scheinwerfer (1) nach einem der Ansprüche 1 bis 10, **dadurch gekennzeichnet, dass** jedem Lichtführungselement (5) bzw. der zugehörigen Lichteintrittsfläche (5e) jeweils mindestens eine Lichtquelle (2) zugeordnet ist.

## Claims

1. A headlamp (1) for a vehicle, having at least one light source (2), a primary optical system (3) for generating a lighting image, and a projecting optical system (4), said projecting optical system (4) being configured to project the lighting image onto the road as a light image,
the primary optical system (3) having a plurality of light-guiding elements (5) and a supporting layer (6), the light-guiding elements (5) being arranged on a rear face (6r) of the supporting layer (6), and the lighting image being generatable on a front face (6v) of the supporting layer (6),
the light-guiding elements (5) being arranged adjacently to one another or overlapping one another in series in an axial direction (y) and forming at least one row (7), each light-guiding element (5) having a light input face (5e) for coupling in light from at least one light source (2) and a light output face (5a) for coupling out light,
**characterised in that**
all the light-guiding elements (5) of the at least one row (7) have a common border (8) which is curved continuously on at least one side oriented substantially along the axial direction (y) and which, with the supporting layer (6), forms an intersection curve having a curved curve profile (9, 10), the curve profile (9, 10) being curved so as to reduce distortion.

2. The headlamp (1) according to Claim 1, **characterised in that** the headlamp (1) comprises multiple parallel rows (7, 7a, 7b).

3. The headlamp (1) according to Claim 1 or 2, **characterised in that** the rows (7, 7a, 7b) are oriented horizontally or vertically when installed in the vehicle.

4. The headlamp (1) according to any one of Claims 1 to 3, **characterised in that** all the rows (7, 7a, 7b) form a common border (8a) which is curved continuously on at least one side oriented in the axial direction (y) and which, with the supporting layer (6), forms an intersection curve with a curved curve profile (9, 10).

5. The headlamp (1) according to any one of Claims 1 to 4, **characterised in that** the curve profile (9, 10) obeys a cosine function.

6. The headlamp (1) according to any one of Claims 1 to 4, **characterised in that** the curve profile (9, 10) is a circular segment.

7. The headlamp (1) according to any one of Claims 1 to 4, **characterised in that** the curve profile (9, 10) is an elliptical segment.

8. The headlamp (1) according to any one of Claims 1 to 4, **characterised in that** the curve profile (9, 10) is a freely formed line.

9. The headlamp (1) according to any one of Claims 1 to 4, **characterised in that** the curve profile (9, 10) is a freely formed line which corresponds to a circular segment with increasing curvature.

10. The headlamp (1) according to any one of Claims 1 to 9, **characterised in that** the border (8, 8a) forms a curve profile (9, 10) on each of two sides, and both curved curve profiles (9, 10), when viewed together, form a convex shape.

11. The headlamp (1) according to any one of Claims 1 to 10, **characterised in that** each light-guiding element (5) or the associated light input face (5e) is assigned at least one light source (2).

## Revendications

1. Phare (1) pour un véhicule automobile, comportant au moins une source de lumière (2), une optique primaire (3) pour générer une image illuminée et une optique d'imagerie (4), dans lequel au moyen de l'optique imagerie (4) l'image illuminée peut être projetée comme une image lumineuse sur la rue,
l'optique primaire (3) présente une pluralité d'éléments de guidage de lumière (5) ainsi qu'une couche porteuse (6), dans lequel sur un côté arrière (6r) de la couche porteuse (6) les éléments de guidage de lumière (5) sont disposés, et sur un côté avant (6v) de la couche porteuse (6) l'image lumineuse peut être générée,
les éléments de guidage de lumière (5) sont disposés côte à côte en étant ensuite juxtaposés ou superposés dans une rangée dans une orientation (y) et forment au moins une ligne (7), dans lequel chaque élément de guidage de lumière (5) présente une surface d'entrée de lumière (5e) pour le couplage de la lumière provenant d'au moins une source de lumière (2), ainsi qu'une surface de sortie de lumière (5a) pour le découplage de la lumière,
**caractérisé en ce que**
la totalité des éléments de guidage de lumière (5) d'au moins une ligne (7) présente une bordure commune (8), qui est incurvée en continu sur au moins un côté orienté essentiellement le long de la direction axiale (y) et réalise avec la couche porteuse (6) une courbe de section avec un cours incurvé (9, 10), dans lequel le cours incurvé (9, 10) est incurvé de telle sorte qu'il réduise une distorsion.

2. Phare (1) selon la revendication 1, **caractérisé en ce que** le phare (1) comprend plusieurs lignes parallèles (7, 7a, 7b).

3. Phare (1) selon la revendication 1 ou 2, **caractérisé en ce que** les lignes (7, 7a, 7b) dans la position de montage sont disposées en étant orientées horizontalement ou verticalement dans le véhicule.

4. Phare (1) selon une des revendications 1 à 3, **caractérisé en ce que** toutes les lignes (7, 7a, 7b) forment une bordure commune (8a), qui est incurvée en continu sur au moins un côté orienté dans la direction axiale (y) et réalise avec la couche porteuse (6) une courbe de section avec un cours incurvé (9, 10).

5. Phare (1) selon une des revendications 1 à 4, **caractérisé en ce que** le cours incurvé (9, 10) suit une fonction de cosinus.

6. Phare (1) selon une des revendications 1 à 4, **caractérisé en ce que** le cours incurvé (9, 10) est un segment circulaire.

7. Phare (1) selon une des revendications 1 à 4, **caractérisé en ce que** le cours incurvé (9, 10) est un segment elliptique.

8. Phare (1) selon une des revendications 1 à 4, **caractérisé en ce que** le cours incurvé (9, 10) est une ligne de forme libre.

9. Phare (1) selon une des revendications 1 à 4, **caractérisé en ce que** le cours incurvé (9, 10) est une ligne de forme libre, qui correspond à un segment circulaire avec une incurvation croissante.

10. Phare (1) selon une des revendications 1 à 9, **caractérisé en ce que** la bordure (8, 8a) réalise sur deux côtés respectivement un cours incurvé (9, 10) et les deux cours incurvés (9, 10) considérés en commun forment une forme convexe.

11. Phare (1) selon une des revendications 1 à 10, **caractérisé en ce que** chaque élément de guidage de lumière (5) resp. la surface d'entrée de lumière afférente (5e) est respectivement coordonné à au moins une source de lumière (2).
